(19) Europäisches Patentamt / European Patent Office / Office européen des brevets

(11) **EP 2 553 567 B1**

(12) **FASCICULE DE BREVET EUROPEEN**

(45) Date de publication et mention de la délivrance du brevet:
**03.09.2014 Bulletin 2014/36**

(21) Numéro de dépôt: **11720313.3**

(22) Date de dépôt: **28.03.2011**

(51) Int Cl.:
***G06F 7/58*** *(2006.01)*

(86) Numéro de dépôt international:
**PCT/FR2011/050670**

(87) Numéro de publication internationale:
**WO 2011/121218 (06.10.2011 Gazette 2011/40)**

(54) **GÉNÉRATEUR DE SÉQUENCES CHAOTIQUES ET SYSTÈME DE GÉNÉRATION CORRESPONDANT**

GENERATOR FÜR CHAOTISCHE SEQUENZEN UND ZUGEHÖRIGES GENERIERUNGSSYSTEM

GENERATOR OF CHAOTIC SEQUENCES AND CORRESPONDING GENERATING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2010 FR 1052288**

(43) Date de publication de la demande:
**06.02.2013 Bulletin 2013/06**

(73) Titulaire: **Université de Nantes
44000 Nantes (FR)**

(72) Inventeurs:
• **EL ASSAD, Safwan**
  **F-44470 Carquefou (FR)**
• **NOURA, Hassan**
  **F-44300 Nantes (FR)**

(74) Mandataire: **Domenego, Bertrand
Cabinet Lavoix
2, place d'Estienne d'Orves
75441 Paris Cedex 09 (FR)**

(56) Documents cités:
• EL ASSAD S ET AL: "Design and Analyses of Efficient Chaotic Generators for Crypto-systems", WORLD CONGRESS ON ENGINEERING AND COMPUTER SCIENCE 2008, WCECS '08. ADVANCES IN ELECTRICAL AND ELECTRONICS ENGINEERING - IAENG SPECIAL EDITION OF THE, IEEE, PISCATAWAY, NJ, USA, 22 octobre 2008 (2008-10-22), pages 3-12, XP031526532, ISBN: 978-1-4244-3545-6
• TKACIK T E: "A HARDWARE RANDOM NUMBER GENERATOR", CRYPTOGRAPHIC HARDWARE AND EMBEDDED SYSTEMS. INTERNATIONALWORKSHOP, XX, XX, 13 août 2002 (2002-08-13), pages 450-453, XP001160535,
• SHUJUN LI ET AL: "Statistical Properties of Digital Piecewise Linear Chaotic Maps and Their Roles in Cryptography and Pseudo-Random Coding", CRYPTOGRAPHY AND CODING: 8TH IMA INTERNATIONAL CONFERENCE, CIRENCESTER, UK, DECEMBER 17 - 19, 2001; PROCEEDINGS. (IN: LECTURE NOTES IN COMPUTER SCIENCE), SPRINGER-VERLAG, HEIDELBERG-BERLIN, DE, vol. 2260, 17 décembre 2001 (2001-12-17), pages 205-221, XP007917061, ISBN: 978-3-540-43026-1
• AZZINNARI L ET AL: "A Simple Digital FPGA Pseudo-Chaos Generator", CIRCUIT PARADIGM IN THE 21ST CENTURY: ECCTD '01, PROCEEDINGS OF THE 15TH EUROPEAN CONFERENCE ON CIRCUIT THEORY AND DESIGN, HELSINKI UNIVERSITY OF TECHNOLOGY, ESPOO, FINLAND, 28TH - 31ST AUGUST 2001,, vol. 3, 28 août 2001 (2001-08-28), pages 25-28, XP007917063, ISBN: 978-951-22-5582-5
• MARTIN HASLER ET AL: "An Introduction to the Synchronization of Chaotic Systems: Coupled Skew Tent Maps", IEEE TRANSACTIONS ON CIRCUITS AND SYSTEMS PART I: REGULAR PAPERS, IEEE SERVICE CENTER, NEW YORK, NY, US, vol. 44, no. 10, 1 octobre 1997 (1997-10-01), pages 856-866, XP011011631, ISSN: 1057-7122

**(Cont. page suivante)**

- LI SHUJUN ET AL: "Pseudo-random Bit Generator Based on Couple Chaotic Systems and Its Applications in Stream-Cipher Cryptography", PROGRESS IN CRYPTOLOGY: PROCEEDINGS INDOCRYPT 2001, SECOND INTERNATIONAL CONFERENCE ON CRYPTOLOGY IN INDIA, CHENNAI, INDIA, DECEMBER 16 - 20, 2001 (IN: LECTURE NOTES IN COMPUTER SCIENCE),, vol. 2247, 16 décembre 2001 (2001-12-16), pages 316-329, XP007917060, ISBN: 978-3-540-43010-0

**Description**

La présente invention concerne un générateur de séquences chaotiques de valeurs entières.

Elle concerne également un système de génération de séquences chaotiques un système de cryptage, un procédé de mesure de la longueur de l'orbite d'une séquence chaotique discrète et un programme d'ordinateur correspondants.

Plus particulièrement, l'invention se rapporte au domaine de la sécurité des données partagées, transmises et stockées dans les réseaux de transmission d'informations.

Le transfert des données confidentielles (documents d'entreprise, informations médicales, résultats de recherche, informations personnelles de types photos et vidéos, etc.) dans un environnement ouvert utilisant les canaux usuels de communication (câbles, Internet, Radio-mobiles, satellites,...) doit être réalisé avec une sécurité maximale et un débit suffisant. A cet effet, les crypto-systèmes basés sur les signaux chaotiques sont adéquats pour atteindre les objectifs cités. Un élément déterminant dans tout crypto-système basé chaos est le générateur des séquences chaotiques, qui sert à la génération des clés secrètes et au processus de chiffrement/déchiffrement des données dans les opérations de substitution et de permutation. La confidentialité des données dépendra entre autres du degré du chaos (c'est-à-dire de l'aléatoire) des séquences produites par le générateur des séquences chaotiques utilisé.

Cependant, les signaux chaotiques n'ont pas été largement utilisés dans l'état de la technique des systèmes de cryptage, en raison de leur périodicité selon des cycles de longueur finie assez faible.

Le document « Design and Analyses of Efficient Chaotic Generators for Crypto-Systems » de Safwan El Assad et al. dans Advances in Electrical and Electronics Engineering IAENG Special Edition of the World Congress on Engineering and Computer Sciences 2008, Vol. 1, pages 3 à 12 décrit un générateur de séquences chaotiques de valeurs entières destinées notamment à former des clés de cryptage d'informations, le dit générateur comprenant au moins deux filtres récursifs discrets d'ordre au moins égal à 1 générant en sortie une séquence chaotique de valeurs entières, chaque filtre récursif comprenant des moyens de mise en oeuvre d'une fonction non linéaire, raccordés à travers une porte ou-exclusif à des moyens de génération d'une séquence de perturbation.

Dans le document précité, les deux filtres récursifs sont montés en série, ce qui provoque de longs temps de calcul pour la génération des séquences chaotiques.

Le but de l'invention est de résoudre ce problème.

A cet effet, l'invention a pour objet un générateur de séquences chaotiques $e_u(n)$, n étant un entier strictement positif, de valeurs entières représentées sur un nombre de bits de quantification $N$ déterminé, destinées notamment à former des clés de cryptage d'informations, ledit générateur comprenant au moins deux filtres récursifs discrets d'ordre au moins égal à 1 générant en sortie une séquence chaotique de valeurs entières, chaque filtre récursif comprenant des moyens de mise en oeuvre d'une fonction non linéaire $F$, raccordés à travers une porte ou-exclusif à des moyens de génération d'une séquence de perturbation $Q(n)$ de valeurs entières représentées sur un nombre de bits de quantification k déterminé, caractérisé en ce que les deux filtres sont montés en parallèle, la séquence chaotique $e_u(n)$ de sortie du générateur étant égale à un ou-exclusif des séquences chaotiques de sortie des filtres récursifs et en ce que les moyens de mise en oeuvre de la fonction non linéaire comprennent une carte chaotique.

Selon d'autres aspects de l'invention, le générateur de séquences chaotiques comprend l'une ou plusieurs des caractéristiques suivantes :

- les moyens de génération d'une séquence de perturbation dans chaque filtre comprennent un registre à décalage à réaction à longueur maximale utilisant un polynôme primitif de degré $k$,
- l'ordre de chaque filtre récursif est inférieur ou égal à 3,
- les moyens de mise en oeuvre de la fonction non linéaire comprennent une carte chaotique linéaire par morceaux PWLCM,
- les séquences $e_{uj}(n)$ de sortie de chaque filtre récursif j = 1,2 sont données par la relation

$$e_{uj}(n) = F\left(X_j(n-1), P\right) \oplus Q(n)$$

où

$$F\big(X_j(n-1),P\big)=\begin{cases}\left\lfloor\dfrac{2^N\times X_j(n-1)}{P}\right\rfloor & 0\le X_j(n-1)\le P\\[2ex]\left\lfloor\dfrac{2^N\times\left[X_j(n-1)-P\right]}{2^{N-1}-P}\right\rfloor & P\le X_j(n-1)\le 2^{N-1}\\[2ex]\left\lfloor\dfrac{2^N\times\left[2^N-1-X_j(n-1)-P\right]}{2^{N-1}-P}\right\rfloor & 2^{N-1}\le X_j(n-1)\le 2^N-P\\[2ex]\left\lfloor\dfrac{2^N\times\left[2^N-1-X_j(n-1)\right]}{P}\right\rfloor & 2^N-P\le X_j(n-1)\le 2^N\end{cases}$$

avec

$$X_j(n-1)=\mathrm{mod}\left[k_{uj}(n-1)+c_{j1}\times e_{uj}(n-1)+c_{j2}\times e_{uj}(n-2)+c_{j3}\times e_{uj}(n-3),2^N\right]$$

où

- $P$ est un paramètre de contrôle dont la valeur est inférieure à $2^{N-1}$,
- $k_{uj}(n)$ est la séquence d'entrée du filtre récursif $j$,
- $C_{j1}$, $C_{j2}$, $C_{j3}$ représentent les coefficients du filtre récursif j,
- l'opération $\lfloor X\rfloor$ consiste à retourner le plus grand entier plus petit ou égal à x,
- l'opération $\mathrm{mod}(X,2^N)$ consiste à effectuer le modulo $2^N$ de $X$, et
- les moyens de mise en oeuvre de la fonction non linéaire comprennent une carte chaotique de type « SKEW-Tent ».

L'invention concerne également un système de génération de séquences chaotiques comprenant au moins un ensemble de 14 générateurs de séquences chaotiques selon l'invention, lesdits générateurs étant répartis en deux groupes de 7 générateurs chacun, caractérisé en ce qu'il comprend :

- un premier multiplexeur analogique permettant de sélectionner la sortie d'un premier générateur parmi les générateurs du premier groupe,
- un deuxième multiplexeur analogique permettant de sélectionner la sortie d'un deuxième générateur parmi les générateurs du deuxième groupe,
les sorties des deux multiplexeurs étant raccordées à une porte ou-exclusif générant en sortie la séquence chaotique, et
- des moyens d'adressage des multiplexeurs comprenant un registre à décalage à réaction raccordé à une horloge dont la période est fonction de la longueur de la séquence chaotique.

Selon d'autres aspects de l'invention, le système de génération de séquences chaotiques comprend l'une ou plusieurs des caractéristiques suivantes :

- il comprend deux ensembles montés en parallèle de 14 générateurs de séquences chaotiques chacun, la séquence chaotique générée en sortie du système de génération étant égale à un ou-exclusif des séquences chaotiques générées aux sorties des deux ensembles de 14 générateurs,
- les polynômes primitifs des registres à décalage à réaction du premier ensemble de générateurs sont différents des polynômes primitifs des registres à décalage à réaction du deuxième ensemble de générateurs,
- il comprend des moyens d'élimination d'une quantité déterminée d'échantillons des séquences chaotiques générées par le système, et
- il comprend des moyens de quantification des séquences chaotiques générées.

L'invention concerne aussi un système de cryptage, caractérisé en ce qu'il comprend un tel système de génération de séquences chaotiques, ledit système de génération de séquences chaotiques étant utilisé pour la génération de clés secrètes et dans les procédures de chiffrement/déchiffrement du système de cryptage.

L'invention concerne également un procédé de mesure de la longueur de l'orbite, formée d'un transitoire et d'un cycle, d'une séquence chaotique discrète d'échantillons, la longueur de ladite orbite étant égale à la somme des longueurs du transitoire et du cycle de la séquence, caractérisé en ce qu'il comprend les étapes de :

- génération d'une sous-séquence initiale consistant en un nombre $N_t$ déterminé d'échantillons de la séquence chaotique ;
- uniquement si la sous-séquence ne comprend pas de cycle, génération itérative d'une sous-séquence suivante consistant en un nombre $N'_t$ déterminé d'échantillons de la séquence chaotique jusqu'à ce que la sous-séquence globale formée de toutes les sous-séquences générées comprenne un cycle, et
- calcul de la longueur de l'orbite de la séquence chaotique à partir des longueurs du transitoire et du cycle de la sous-séquence globale.

L'invention concerne en outre un procédé de mesure de la valeur de l'orbite d'un filtre récursif discret du générateur de séquences chaotiques selon l'invention, caractérisé en ce qu'il comprend les étapes du procédé de mesure précité.

L'invention concerne enfin un programme d'ordinateur comprenant des instructions de code qui, lorsque ce programme est exécuté sur un ordinateur, permettent la mise en oeuvre des étapes d'un tel procédé de mesure.

Ainsi, l'invention permet de pallier les inconvénients du générateur de séquences chaotiques du document précité en proposant un montage en parallèle des deux filtres récursifs du générateur.

En outre, le système de génération de séquences chaotiques selon l'invention comportant une pluralité de générateurs de séquences chaotiques permet de générer des signaux chaotiques discrets de périodes très longues, pouvant atteindre plusieurs siècles. Ceci est très important pour la sécurité des données, car avec de telles séquences chaotiques non répétitives, il est possible de générer des clés de cryptage de très grandes tailles.

De plus, le procédé de mesure de la longueur de l'orbite d'une séquence chaotique selon l'invention permet de mesurer de façon précise la longueur de l'orbite de toute séquence chaotique de manière rapide et efficace.

On va maintenant décrire des modes de réalisation de l'invention de façon plus précise mais non limitative en regard des dessins annexés, sur lesquels :

- la figure 1 est un schéma synoptique illustrant la structure et le fonctionnement d'un générateur de séquences chaotiques selon l'invention,
- la figure 2 est un schéma synoptique illustrant le principe de la perturbation de séquences chaotiques,
- la figure 3 est un schéma synoptique illustrant la structure et le fonctionnement d'un système de génération de séquences chaotiques selon l'invention,
- la figure 4 est un organigramme illustrant le fonctionnement du procédé de mesure de la longueur de l'orbite d'une séquence chaotique selon l'invention, et
- la figure 5 est un organigramme illustrant le fonctionnement du procédé de mesure de la longueur de l'orbite d'une séquence chaotique générée par un filtre récursif d'ordre 3.

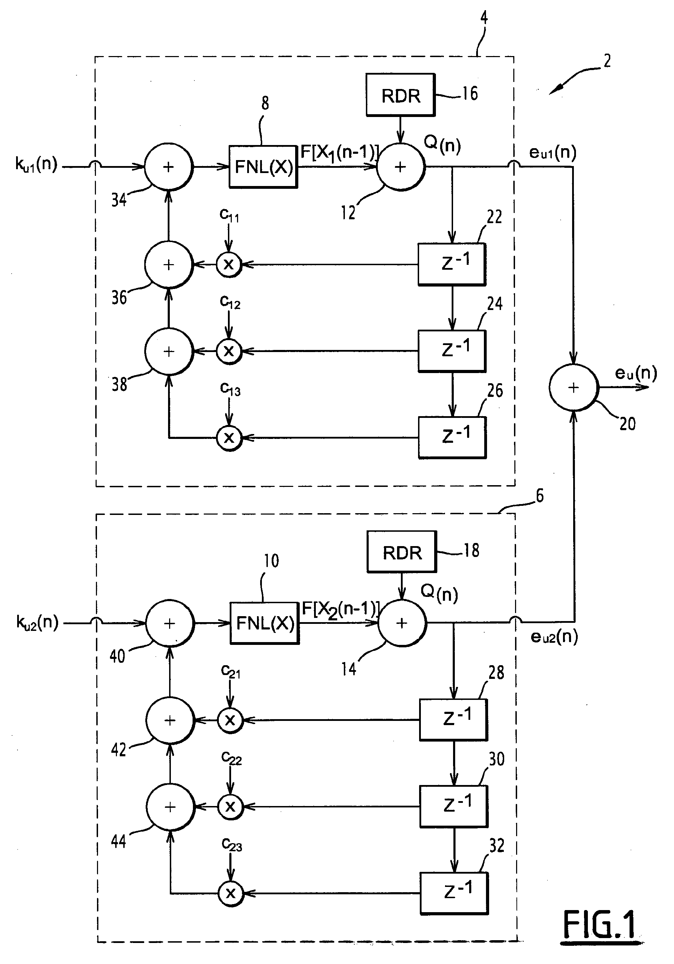

La figure 1 illustre un générateur 2 de séquences chaotiques eu (n), n étant un entier strictement positif, de valeurs entières représentées sur un nombre de bits de quantification N déterminé.

La séquence chaotique $e_u$ (n) générée est destinée notamment à former des clés de cryptage d'informations et à être utilisée dans les processus de chiffrement/déchiffrement dans les opérations de substitution et de permutation pour la sécurité des données partagées, transmises et stockées.

Le générateur 2 comprend au moins deux filtres récursifs discrets 4 et 6 d'ordre au moins égal à 1 et de préférence égal à 3 comme sur la figure 1. Il est cependant possible d'utiliser des filtres récursifs 4 et 6 d'ordre 1 ou 2.

Le premier filtre récursif 4 génère en sortie une séquence chaotique $e_{u1}$ (n) de valeurs entières.

Le deuxième filtre récursif 6 génère en sortie une séquence chaotique $e_{u2}$ (n) de valeurs entières.

Les filtres récursifs 4, 6 comprennent des moyennes de mise en oeuvre d'une fonction non linéaire F 8, 10 respectivement raccordés à travers une porte ou exclusif 12, 14 respectivement à des moyens de génération d'une séquence de perturbation Q(n) 16, 18 respectivement.

Les moyens de génération d'une séquence de perturbation 16, 18 dans les filtres récursifs 4, 6 respectivement comprennent un registre à décalage à réaction à longueur maximale m-LFSR (« Maximal-Length Linear Feedback Shift Register ») 16, 18 respectivement.

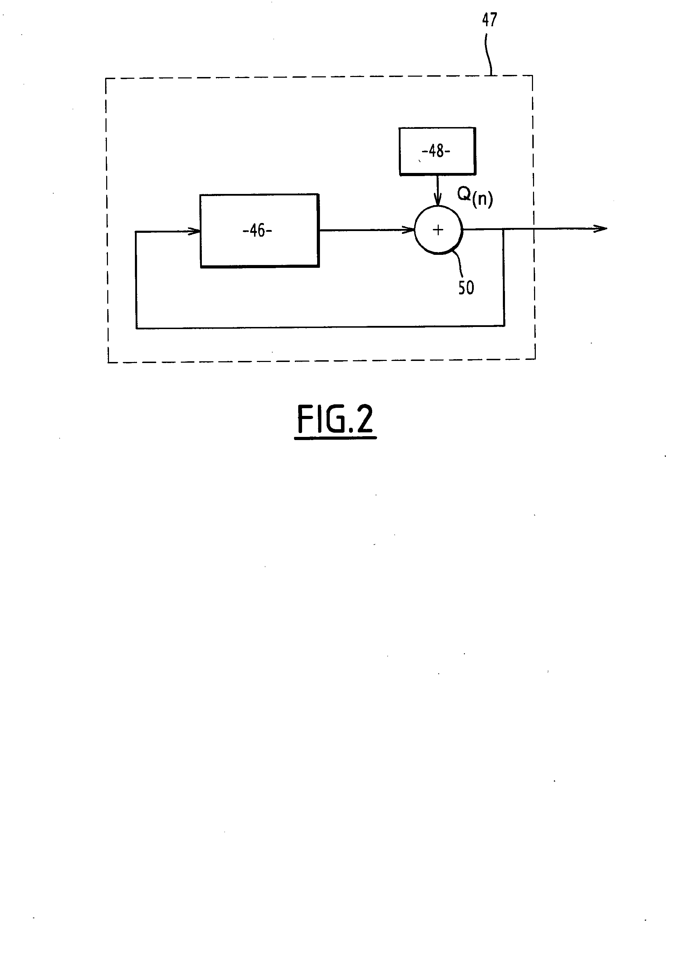

Le rôle de la séquence de perturbation sera décrit de manière plus détaillée en référence à la figure 2.

Selon l'invention, les deux filtres récursifs 4 et 6 sont montés en parallèle de sorte que la séquence chaotique $e_u$ (n) en sortie du générateur 2 est égale à un ou-exclusif 20 des séquences chaotiques $e_{u1}$ (n) et $e_{u2}$ (n) en sortie des filtres récursifs 4, 6.

Les deux filtres récursifs 4, 6 comprennent des entrées libres $k_{u1}(n)$ et $k_{u2}$ (n) respectivement.

Dans le cas de filtres récursifs 4, 6 d'ordre 3, comme représentés sur la figure 1, chacun des filtres 4, 6 comprend trois retards 22, 24, 26 et 28, 30, 32 respectivement trois opérateurs multiplicateurs de gain $C_{11}$, $C_{12}$ et $C_{13}$ pour le premier filtre récursif 4 et $C_{21}$, $C_{22}$,$C_{23}$ pour le deuxième filtre récursif 6 et trois additionneurs modulo $2^N$ 34, 36, 38 et 40, 42, 44 respectivement.

Les moyens de mise en oeuvre d'une fonction non-linéaire 8, 10 comprennent des circuits mettant en oeuvre la fonction xlogx ou la fonction xexp[cos (x)] ou bien une carte de Chebyshev ou une carte SKEW-Tent ou encore une carte chaotique linéaire par morceaux PWLCM (« Piecewise Linear Chaotic Map »).

Les simulations menées par les inventeurs indiquent que c'est la carte PWLCM qui donne les meilleurs résultats en termes d'efficacité vis-à-vis de la cryptanalyse et de la simplicité de réalisation.

Dans le mode de réalisation de la figure 1 utilisant une carte PWLCM, la sortie eu (n) du générateur 2 vérifie la relation $e_u(n) = e_{u1}(n) \oplus e_{u2}(n)$ avec

$$\underset{j=1,2}{e_{uj}(n)} = F\left[X_j(n-1), P\right] \oplus Q(n)$$

où :

$$\underset{j=1,2}{F\left[X_j(n-1), P\right]} = \begin{cases} \left\lfloor \dfrac{2^N \times X_j(n-1)}{P} \right\rfloor & 0 \leq X_j(n-1) \leq P \\[2ex] \left\lfloor \dfrac{2^N \times \left[X_j(n-1) - P\right]}{2^{N-1} - P} \right\rfloor & P \leq X_j(n-1) \leq 2^{N-1} \\[2ex] \left\lfloor \dfrac{2^N \times \left[2^N - 1 - X_j(n-1) - P\right]}{2^{N-1} - P} \right\rfloor & 2^{N-1} \leq X_j(n-1) \leq 2^N - P \\[2ex] \left\lfloor \dfrac{2^N \times \left[2^N - 1 - X_j(n-1)\right]}{P} \right\rfloor & 2^N - P \leq X_j(n-1) \leq 2^N \end{cases}$$

avec :

$$\underset{j=1,2}{X_j(n-1)} = \mathrm{mod}[k_{uj}(n-1) + c_{j1} \times e_{uj}(n-1) + c_{j2} \times e_{uj}(n-2) + c_{j3} \times e_{uj}(n-3), 2^N]$$

où P est un paramètre de contrôle vérifiant $0 < P < 2^{N-1}$,

- $k_{uj}(n)$ est la séquence d'entrée du filtre récursif $j$,
- $c_{j1}$, $c_{j2}$, $c_{j3}$ représentent les coefficients du filtre récursif j,

l'opération $\lfloor X \rfloor$ retourne le plus grand entier plus petit ou égal à x (fonction « Floor ») et l'opération mod $(X, 2^N)$ consiste à effectuer le modulo $2^N$ de $X$.

Le générateur 2 produit des valeurs chaotiques entières et non réelles. Ceci est primordial, car dans ce cas, les valeurs générées en émission et en réception dépendent seulement du nombre N choisi et non de la précision des moyens de calculs utilisés. Autrement, la clé secrète peut être interprétée différemment en réception par rapport à l'émission et vu l'extrême sensibilité du système à la clé secrète, les valeurs générées en émission et en réception risquent d'être différentes. Notons cependant, que l'opération de discrétisation dégrade les dynamiques chaotiques de la carte chaotique initiale (avant discrétisation car : $X(n) \neq 2^N \times x(n)$ où $x(n) \in \mathbf{R}\{0,1\}$ où $\mathbf{R}\{0,1\}$ désigne l'ensemble des nombres réels compris entre 0 et 1.

La technique de cascade de deux filtres récursifs en parallèle permet d'augmenter la longueur du cycle par rapport à l'utilisation d'un seul filtre. En effet, si nous désignons par $l_1$ la longueur du cycle du premier filtre 4 et par $l_2$ la longueur du cycle du deuxième filtre 6, alors la longueur I du cycle de générateur composé de deux filtres récursifs en parallèle est le plus petit commun multiple (ppcm) de $l_1$ et de $l_2$, soit :

$$I = \text{ppcm} (I_1, I_2,)$$

avec $1 \leq I_1 \leq (2^N -1)^3$, $1 \leq I_2 \leq (2^N-1)^3$.

Si, le plus grand diviseur (pgcd) de $I_1$ et $I_2$ est égal à l'unité, soit :

$$\text{pgcd} (I_1, I_2) = 1$$

alors :

$$I = I_1 \times I_2.$$

En outre, le générateur 2 intègre une technique de perturbation de l'orbite chaotique ce qui permet non seulement de résoudre le problème de la dégradation des dynamiques chaotiques, mais aussi d'augmenter considérablement la longueur des cycles et d'assurer une sécurité maximale.

La figure 2 illustre le principe de la perturbation d'une séquence chaotique générée par un générateur chaotique standard tel une carte PWLCM 46 faisant partie d'un filtre récursif 47 d'ordre 1.

La séquence de perturbation Q(n) générée à l'aide d'un registre à décalage à réaction 48 à longueur maximale a pour rôle de perturber l'orbite chaotique du générateur 46 lui permettant ainsi d'accéder à une nouvelle orbite.

Le registre de décalage à réaction 48 utilise un polynôme primitif de degré k, de sorte que la séquence de perturbation Q (n) générée est représentée sur k bits.

Le registre 48 est caractérisé par une bonne fonction d'auto-corrélation, une distribution presque uniforme, un cycle de longueur maximale égale à $2^k$-1 et une implémentation logicielle ou matérielle facile.

En partant de l'équation du générateur 46 :

$$X(n)=F[X(n-1)] \in 2^N - 1 \; n=1,2,....$$

où chaque valeur X(n) est représentée par N bits :

$$X(n) = x_{N-1}(n)x_{N-2}(n)\ldots x_i(n) \ldots x_{0(n)} \quad x_i(n) \in A_b = [0,1]$$
$$i = 0, 1, \ldots N-1.$$

Par ailleurs, en notant $\Delta$ l'horloge du registre 48, la perturbation n'est appliquée à la séquence chaotique générée par le générateur 46 que si $n = m \times \Delta$ avec m un entier, c'est-à-dire pour n = 0 et toutes les $\Delta$ itérations. L'horloge $\Delta$ du registre 48 représente ainsi le cycle minimal du filtre récursif 47 sans perturbation.

En effet, si :

$$e_{uj}(n) = x_{j,N-1}(n)x_{j,N-2}(n)\ldots x_{j,i}(n)\ldots x_{j,0}(n) \quad x_{j,i}(n) \in A_b = [0,1]$$
$$i = 0,1,\ldots N-1; \quad j = 1, 2$$

alors :

$$x_{j,i}(n) = \begin{cases} F[x_{j,i}(n-1), P] & k \leq i \leq N-1 \\ F[x_{j,i}(n-1), P] \oplus Q_i(n) & 0 \leq i \leq k-1 \end{cases}$$

où $F[x_{j,i}(n-1)]$ représente le ième bit de $F[X_j(n-1), P]$ et $Q_i(n)$ représente le ième bit de la séquence de perturbation, telle que :

$$Q_{k-1}^{+}(n) = Q_k(n) = g_0 Q_0(n) \oplus g_1 Q_1(n) \oplus ... g_{k-1} Q_{k-1}(n)$$

où n=0,1,2, ..., [$g_0$, $g_1$, ..., $g_{k-1}$] sont les coefficients du polynôme primitif du registre à décalage 48 et [$Q_0$, $Q_1$, ..., $Q_{k-1}$] représente la valeur initiale non nulle du registre 48. Notons que la séquence perturbatrice est appliquée sur les k bits de poids faibles de F[X(n-1)].

Si $n \neq m \times \Delta$, m = 0, 1, 2, ..., la sortie du générateur de séquences chaotiques n'est pas perturbée, donc :

$$X(n) = F[X(n-1)]$$

La période du filtre récursif 47 perturbé est donnée par :

$$L = \sigma \times \Delta \times (2^k - 1)$$

où $\sigma$ est un entier positif. La période minimale du filtre récursif 47 perturbé est alors :

$$L_{min} = \Delta \times (2^k - 1).$$

En outre, la séquence perturbatrice Q générée par le registre à décalage à réaction 48 a une amplitude nettement plus faible que celle de la séquence chaotique générée par le générateur 46 de sorte que le rapport R entre les deux amplitudes maximales est supérieur ou égal à 40 dB :

$$R = 20 \log \left[ \frac{\text{Amplitude maximale du signal chaotique}}{\text{Amplitude maximale du signal perturbateur}} \right] \geq 40 \, dB .$$

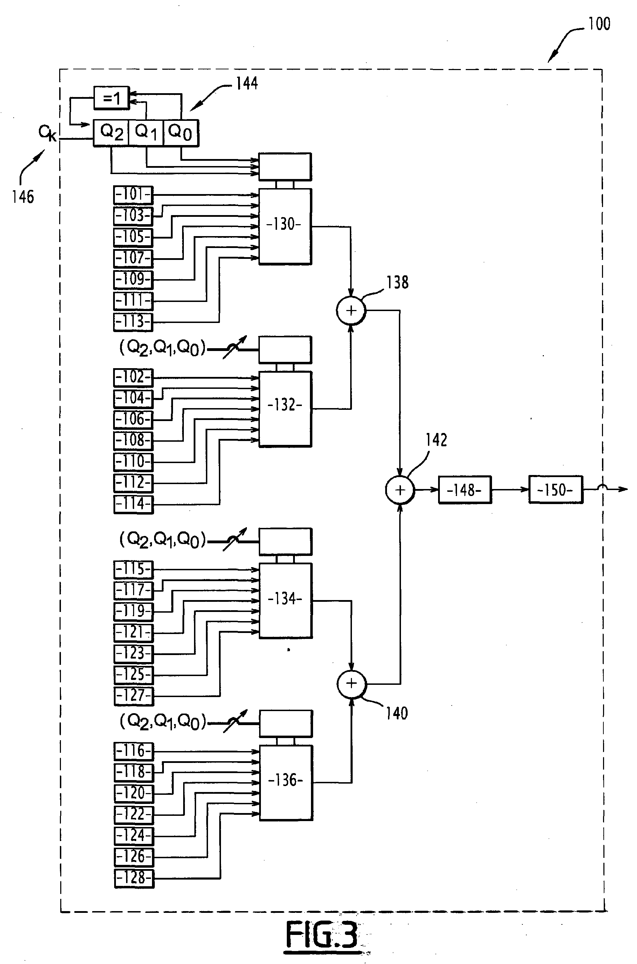

La figure 3 illustre la structure d'un système de génération 100 de séquences chaotiques selon l'invention.

Le système de génération 100 comporte vingt huit générateurs 101 à 128 de séquences chaotiques analogues au générateur 2 de la figure 1.

Les 28 générateurs 101 à 128 sont répartis en deux ensembles de générateurs, le premier ensemble comprenant les 14 générateurs 101 à 114 et le deuxième ensemble comprenant les 14 générateurs 115 à 128.

Chaque ensemble de 14 générateurs comprend deux groupes de 7 générateurs dont les sorties sont raccordées aux entrées d'un multiplexeur analogique 8 vers 1.

Ainsi, les sorties des générateurs 101, 103, 105, 107, 109, 111 et 113 sont raccordées aux entrées d'un multiplexeur 130 et les sorties des générateurs 102, 104, 106, 108, 110, 112 et 114 sont raccordées aux entrées d'un multiplexeur 132.

Les sorties des générateurs 115, 117, 119, 121, 123, 125 et 127 sont raccordées aux entrées d'un multiplexeur 134 et les sorties des générateurs 116, 118, 120, 122, 124, 126 et 128 sont raccordées aux entrées d'un multiplexeur 136.

En outre, les sorties des générateurs 130 et 132 sont raccordées à une porte ou-exclusif 138 et les sorties des générateurs 134 et 136 sont raccordées à une porte ou-exclusif 140, les sorties des deux portes ou-exclusif 138 et 140 étant raccordées à une porte ou-exclusif 142.

Les multiplexeurs 130, 132, 134, 136 sont raccordés à des moyens d'adressage desdits multiplexeurs comprenant un registre à décalage à réaction 144 à trois étages raccordé à une horloge $C_k$ 146.

Les valeurs des bits dans les trois étages du registre 144 sont notées $Q_2$, $Q_1$, $Q_0$.

En outre, selon un mode de réalisation particulier de l'invention, le système de génération 100 de séquences chaotiques comprend des moyens d'élimination 148 d'une quantité déterminée d'échantillons des séquences chaotiques générées par le système, par exemple un pourcentage p% d'échantillons.

Le système de génération 100 comprend également, de préférence, des moyens de quantification 150 des séquences chaotiques générées sur un nombre de bits Nq inférieur à N.

Les moyens d'élimination 148 et les moyens de quantification 150 permettent d'augmenter la taille de la clé secrète, ce qui a pour conséquence une amélioration de la sécurité.

Bien que la figure 3 illustre un système de génération 100 comprenant 28 générateurs chaotiques, dans un autre mode de réalisation de l'invention non représenté uniquement 14 générateurs chaotiques sont proposés ce qui correspond à un système de génération consistant en la moitié du système 100 de la figure 3.

Les expressions des vingt huit polynômes primitifs P-G1 à P-G28 des registres à décalage à réaction pour la perturbation des 28 générateurs 101 à 128 respectivement de la figure 3 et du polynôme primitif g du registre à décalage à réaction RDR 144 utilisé pour l'adressage des multiplexeurs 130, 132, 134 et 136 sont les suivantes :

$$P-G1 : g_1(x) = x^{16} + x^{12} + x^3 + x + 1 , ou [16, 12, 3, 1, 0];$$

$$P-G3 : g_3(x) = x^{16} + x^{12} + x^7 + x^2 + 1$$

$$P-G5 : g_5(x) = x^{16} + x^9 + x^5 + x^2 + 1$$

$$P-G7 : g_7(x) = x^{16} + x^{15} + x^9 + x^4 + 1$$

$$P-G9 : g_9(x) = x^{16} + x^{12} + x^9 + x^6 + 1$$

$$P-G11 : g_{11}(x) = x^{16} + x^{10} + x^7 + x^6 + 1$$

$$P-G13 : g_{13}(x) = x^{16} + x^9 + x^4 + x^3 + 1$$

$$P-G2 : g_2(x) = x^{17} + x^3 + 1$$

$$P-G4 : g_4(x) = x^{17} + x^{16} + x^3 + x + 1$$

$$P-G6 : g_6(x) = x^{17} + x^8 + x^7 + x^6 + x^4 + x^3 + 1$$

$$P-G8 : g_8(x) = x^{17} + x^9 + x^8 + x^6 + x^4 + x + 1$$

$$P-G10 : g_{10}(x) = x^{17} + x^7 + x^4 + x^3 + 1$$

$$P-G12 : g_{12}(x) = x^{17} + x^{12} + x^6 + x^3 + x^2 + x + 1$$

$$P-G14 : g_{14}(x) = x^{17} + x^{11} + x^8 + x^6 + x^4 + x^2 + 1$$

$$P-G15 : g_{15}(x) = x^{19} + x^5 + x^2 + x + 1$$

$$P-G17 : g_{17}(x) = x^{19} + x^{12} + x^{10} + x^9 + x^7 + x^3 + 1$$

$$P-G19: g_{19}(x) = x^{19} + x^{13} + x^8 + x^5 + x^4 + x^3 + 1$$

$$P-G21: g_{21}(x) = x^{19} + x^{18} + x^{17} + x^{16} + x^{12} + x^7 + x^6 + x^5 + x^3 + x + 1$$

$$P-G23: g_{23}(x) = x^{19} + x^9 + x^8 + x^7 + x^6 + x^3 + 1$$

$$P-G25: g_{25}(x) = x^{19} + x^{16} + x^{15} + x^{13} + x^{12} + x^9 + x^5 + x^4 + x^2 + x + 1$$

$$P-G27: g_{27}(x) = x^{19} + x^{18} + x^{15} + x^{14} + x^{11} + x^{10} + x^8 + x^5 + x^3 + x^2 + 1$$

$$P-G16: g_{16}(x) = x^{23} + x^5 + 1$$

$$P-G18: g_{18}(x) = x^{23} + x^{12} + x^5 + x^4 + 1$$

$$P-G20: g_{20}(x) = x^{23} + x^{11} + x^{10} + x^7 + x^6 + x^5 + 1$$

$$P-G22: g_{22}(x) = x^{23} + x^{17} + x^{11} + x^5 + 1$$

$$P-G24: g_{24}(x) = x^{23} + x^{21} + x^7 + x^5 + 1$$

$$P-G26: g_{26}(x) = x^{23} + x^5 + x^4 + x + 1$$

$$P-G28: g_{28}(x) = x^{23} + x^{16} + x^{13} + x^6 + x^5 + x^3 + 1$$

$$RDR: g(x) = x^3 + x + 1$$

Le fonctionnement du système de génération 100 de séquences chaotiques est décrit dans la suite de la description en référence à la figure 3.

D'abord, les vingt-huit générateurs 101 à 128 et le registre à décalage à réaction 144 sont initialisés.

L'ensemble des conditions initiales et des paramètres des différents générateurs et des différents registres à décalage à réaction du système 100 forme la taille de la clé secrète.

Ensuite, à chaque état j = 1 , 2, ... 7 du registre 144 à 3 étages, cadencé par l'horloge $C_k$ 146, la longueur de la séquence chaotique en sortie de la porte ou-exclusif 142 est donnée par :

$$L_{j\min_{j=1,2,\cdots,7}} = ppcm\left[L_{j\min 1}, L_{j\min 2}\right]$$

où :

-  ppcm indique le plus petit commun multiple,
-  $L_{j\min 1}$ indique la longueur de la séquence chaotique en sortie de la porte ou-exclusif 138 qui est donnée par relation :

$$L_{j\min 1_{j=1,2,\cdots,7}} = ppcm\left\{\left[2^{k_{(2j-1)}}-1\right]\times\Delta_{k_{(2j-1)}}, \left[2^{k_{(2j)}}-1\right]\times\Delta_{k_{(2j)}}\right\}$$

où :

$\Delta_k(2j-1)$ et $\Delta_{k2j}$ représentent respectivement les périodes de deux générateurs sans perturbation sélectionnés (du premier groupe formé de 14 générateurs 101 à 114) portant les indices (2j-1)+ 100 et 2j+100 avec j allant de 1 à 7.

- $L_{jmin2}$ indique la longueur de la séquence chaotique en sortie de la porte ou-exclusif 140 qui est donnée par la relation :

$$L_{j\min 2_{j=1,2,\cdots,7}} = ppcm\left\{\left[2^{k_{(14+2j-1)}}-1\right]\times\Delta_{k_{(14+2j-1)}}, \left[2^{k_{(14+2j)}}-1\right]\times\Delta_{k_{(14+2j)}}\right\}$$

où :

$\Delta_k(14+2j-1)$ et $\Delta_k(14+2j)$ représentent respectivement les périodes de deux générateurs sans perturbation sélectionnés (du deuxième groupe formé de 14 générateurs 115 à 128) portant les indices (14+2j-1)+ 100 et (14+2j)+100 avec j allant de 1 à 7.

La période de l'horloge $C_k$ 146 du registre à 3 étages 144 est donnée par

$$L_{Ck} = Min\left(L_{j\min_{j=1,2,\cdots,7}}\right)$$

La longueur minimale de la séquence chaotique générée en sortie des moyens d'élimination d'échantillons 148 est alors donnée par

$$L_{\min} = 7\times L_{Ck}\left[1-p\%\right].$$

Cette longueur est extrêmement longue.

En effet, la valeur du cycle nominal $\Delta_{nom}$ d'un générateur de séquences chaotiques classique non perturbé est de l'ordre de $\Delta_{nom} \cong \sqrt{\left(2^N\right)^3} = 2^{3N/2} = 2^{48}$ pour N = 32.

A cet effet, l'article de O.E. Lanford III « Informal Remarks on the Orbit Structure of Discrète Approximation to Chaotic Maps » dans Experimental Mathematics, 1998, vol. 7, n° 4, pp 317-324 donne la valeur de $\Delta_{nom}$ ci-dessus. Cette valeur est en outre vérifiée par le procédé de mesure d'orbite selon l'invention.

La longueur minimale du cycle du filtre récursif perturbé 47 est alors (pour un degré minimal k=16 du registre RDR 48)

$$l_{\min} \cong \Delta_{nom}\times 2^{16} \cong 2^{64}$$

Ainsi, la longueur de la séquence chaotique est donnée par :

$L_{\min}$ = 7 x $2^{128}$ échantillons ce qui est colossal, l'âge de l'univers étant de l'ordre de $10^{10}$ ans.

Avec une telle séquence chaotique, il est possible de chiffrer pratiquement $10^{32}$ images différentes, la taille de chacune étant de 3 x 1024 x 1024 x32 bits.

Cette séquence chaotique est donc idéale pour être utilisée comme un masque jetable pour des canaux de communication ultra secrets comme « le téléphone rouge ».

Par ailleurs, la taille de la clé secrète est très large, comparée aux clés des générateurs des signaux pseudo-aléatoires de l'état de l'art. Elle est formée de toutes les conditions initiales et des paramètres des différents générateurs et des différents registres à décalage à réaction. De ce fait, les différents types d'attaques (exhaustive, à texte en clair choisi, à texte chiffré choisi, ...) sont pratiquement impossibles à réaliser.

Chaque générateur perturbé possède une sous-clé composée de :

- 6 conditions initiales soit 6 x N bits,
- 6 paramètres soit 6 x N bits,
- 2 entrées $k_u$ soit 2 x N bits.

Le registre 144 possède une sous-clé composée de :

- la condition initiale sur $N_1$ = 16 bits minimum et
- $\Delta$ sur $N_2$ = 64 bits minimum

Par ailleurs, 5 bits sont nécessaires dont 2 bits pour indiquer le multiplexeur (1 parmi 4) utilisé suivis de 3 bits pour signaler le générateur perturbé (1 parmi 7) utilisé à l'entrée du multiplexeur en question.

Il faut aussi 3 bits comme condition initiale pour le registre 144 qui adresse les multiplexeurs 130, 132, 134, 136.

Enfin, il faut un nombre de bits minimum N3 # 128 bits pour $L_{Ck}$.

La taille de la clé secrète du système de génération 100 de la figure 3 est donc :

$$N_T \cong 28 \times \left[ 14 \times N + N_1 + N_2 \right] + 128 = 14912 \ bits$$

Elle est énorme. A titre indicatif, la complexité d'une attaque exhaustive pour une clé à 128 bits est approximativement $2^{127}$ tentatives, ou clés possibles pour repérer la bonne clé. Faisant l'hypothèse qu'un ordinateur puisse essayer un million de clés par seconde, il faudra plus que $5 \times 10^{24}$ années pour trouver la bonne clé.

Il va de soi, que la taille de la clé secrète peut être plus petite que cela, selon l'application désirée.

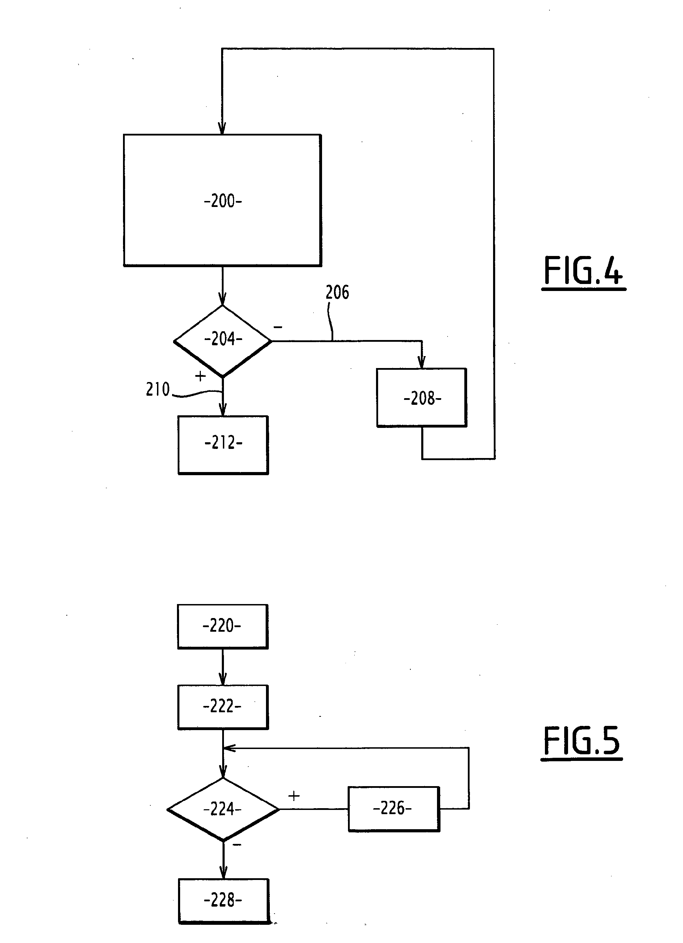

La suite de la description faite en référence aux figures 4 et 5 décrit le fonctionnement du procédé de mesure de la longueur de l'orbite d'une séquence chaotique selon l'invention.

L'orbite d'une séquence chaotique est formée de deux parties qui sont un transitoire et un cycle. La longueur de l'orbite chaotique est notée = c + I où c est la longueur du cycle et I est la longueur du transitoire.

Plusieurs résultats ont été donnés dans la littérature sur cette question et sur la simulation des nombres aléatoires, mais sans indiquer la méthode de mesure utilisée. Ces études indiquent entre autres que : pour un nombre $N_o$ de conditions initiales différentes, le nombre moyen de cycles différents est :

$$\overline{N}_c(N_0) = \sum_{k=1}^{N_0} \frac{1}{2k-1} \cong \frac{1}{2} Ln(N_0) + 0.982 \qquad pour \ N_0 \geq 2 \,.$$

En effet, certaines conditions initiales ne génèrent pas de nouveaux cycles différents.

Le système de génération 100 représenté à la figure 3 génère des cycles de longueurs tels qu'il est impossible de les mesurer.

En effet, la longueur d'un filtre récursif perturbé seul est de l'ordre de $l_{1pnom}$ = $2^{64}$.

Il est donc nécessaire de disposer d'un procédé permettant de mesurer des orbites chaotiques en temps raisonnable.

L'organigramme de la figure 4 illustre le fonctionnement du procédé de mesure de la longueur d'une orbite chaotique selon l'invention.

En 200, pour chaque condition initiale différente et chaque valeur de paramètre, une sous-séquence initiale consistant en un nombre $N_t$ déterminé d'échantillons de la séquence chaotique est générée.

L'étape 204 teste si la sous-séquence générée comprend un cycle ou non. Si, en 206, l'orbite de la sous-séquence générée consiste uniquement en un transitoire, le processus de génération est poursuivi en 208 en générant en 200 une sous-séquence suivante consistant en un nombre $N'_t$ déterminé d'échantillons de la séquence chaotique.

De préférence $N'_t = N_t$ de sorte que la sous-séquence globale obtenue est de longueur $2N_t$.

Le test en 204 de la présence de cycle est alors recommencé et ainsi de suite jusqu'à ce que la sous-séquence globale comprenne un cycle en 210.

Ainsi, à un certain moment, la sous-séquence globale de longueur Ng = W x $N_t$ (avec W un entier positif) est composée d'un transitoire et d'un cycle de longueur non nulle.

En 212, la longueur de l'orbite de la séquence chaotique est calculée comme étant la somme des longueurs du transitoire et du cycle de la sous-séquence globale.

Le procédé de la figure 4 est répété pour toutes les conditions initiales et toutes les valeurs de paramètres.

Une analyse statistique des longueurs des orbites obtenues permet alors de fixer la valeur de l'orbite nominale du générateur chaotique considéré.

Ce procédé a été appliqué à la carte PWLCM seule avec N = 32 et au cas du filtre récursif 4, 6 d'ordre 3 non perturbé de la figure 1 avec N = 11.

Ce choix permet de faire une analyse comparative entre les deux configurations considérées.

L'étape 212 de mesure de la longueur de l'orbite de la séquence chaotique générée par le filtre récursif 4, 6 d'ordre 3 non perturbé est décrite de manière plus détaillée en référence à la figure 5.

Etant donné que le filtre récursif 4, 6 comprend trois retards, la mesure de la longueur de l'orbite de la séquence chaotique générée par ce filtre 4,6 comprend la recherche des occurrences de trois valeurs successives en partant de la valeur du dernier échantillon généré, c'est-à-dire l'échantillon Ng.

En notant Ind(1) l'adresse (dans le vecteur ligne des échantillons de taille Ng) du premier cycle trouvé et Ind(f) l'adresse du dernier cycle trouvé la longueur du cycle est calculée en 220 étant c = Ng - Ind(1).

Ensuite en 222, le calcul suivant est effectué :j = Ind(f) - 1 et k = Ng - 1.

En 224, un test d'égalité des valeurs des échantillons d'adresses j et k est effectué.

Si les valeurs des échantillons d'adresses j et k sont égales, alors en 226, les valeurs de j et de k sont décrémentées soit j = j - 1 et k = k -1.

Si les valeurs des échantillons d'adresses j et k sont différentes, alors la valeur du transitoire I est calculée en 228 comme étant égale à j soit I = j.

La longueur de l'orbite est alors o = c + I.

Le Tableau 1 résume les résultats statistiques obtenus par le filtre récursif 4 non perturbé pour un nombre de conditions initiales $N_o$ = 34489.

Tableau 1

| Nombre de cycles différents | 22307 # $2^{14.44}$ |
|---|---|
| Nombre de transitoires différents | 22476 # $2^{14.45}$ |
| Nombre d'orbites différentes | 28049 # $2^{14.77}$ |
| Moyenne cycles | 24322 # $2^{14.57}$ > $2^{11+3}$ |
| Moyenne transitoires | 18690 # $2^{14.19}$ > $2^{N+d}$ |
| Moyenne orbites | 43237 # $2^{15.4}$ > $2^{N+1+d}$ |
| Longueur Maximale des cycles | 39368737 # $2^{25.23}$ |
| Longueur Maximale des transitoires | 429108 # $2^{18.71}$ |
| Longueur Maximale des orbites | 39368742 # $2^{25.23}$ |
| Longueur Minimale des cycles | 1 |
| Longueur Minimale des transitoires | 2 |
| Longueur Minimale des orbites | 14 |

Le Tableau 2 donne le pourcentage des orbites, cycles et transitoires obtenus par intervalle de longueur.

Tableau 2

| Intervalle en longueur | 0 - 9 | 10 - 99 | 100-999 | $10^3$ -$10^4$-1 | $10^4$ -$10^5$-1 | $10^5$ - $10^6$-1 | $10^6$ - $10^7$-1 | $10^7$ - $10^8$-1 |
|---|---|---|---|---|---|---|---|---|
| Orbite % | 0 | 0.1479 | 2.5370 | 21.8852 | 70.4978 | 4.9001 | 0.0058 | 0.0261 |
| Cycle % | 0.1682 | 1.4497 | 9.9771 | 37.2438 | 50.3465 | 0.7829 | 0.0058 | 0.0261 |
| Transitoire % | 0.1769 | 1.5135 | 9.8089 | 36.9161 | 50.7785 | 0.8061 | 0 | 0 |

Il est remarquable, à partir du tableau 2 que 70% d'orbites se trouvent dans la tranche de longueurs comprises entre $10^4$ et $10^5$, et 92 % d'orbites se trouvent dans la tranche de longueurs comprises entre $10^3$ et $10^5$.

Les Tableaux 3, 4 et 5 donnent le nombre des cycles, des transitoires et des orbites et leurs fréquences correspondantes.

Tableau 3

| Nombre de cycles | 15331 | 4228 | 1465 | 688 | 296 | 152 | 68 | 47 | 22 | 5 | 2 | 1 | 1 | 1 | 1 |
|---|---|---|---|---|---|---|---|---|---|---|---|---|---|---|---|
| Fréquence-cycle | 1 | 2 | 3 | 4 | 5 | 6 | 7 | 8 | 9 | 10 | 11 | 12 | 13 | 14 | 15 |

Tableau 4

| Nombre de transitoires | 15638 | 4116 | 1485 | 624 | 297 | 178 | 67 | 34 | 15 | 10 | 8 | 2 | 1 | 1 |
|---|---|---|---|---|---|---|---|---|---|---|---|---|---|---|
| Fréquence-transitoire | 1 | 2 | 3 | 4 | 5 | 6 | 7 | 8 | 9 | 10 | 11 | 12 | 13 | 14 |

Tableau 5

| Nombre d'orbites | 22799 | 4291 | 766 | 158 | 32 | 3 |
|---|---|---|---|---|---|---|
| Fréquence-orbite | 1 | 2 | 3 | 4 | 5 | 6 |

Le Tableau 6 résume les résultats statistiques obtenus par la carte PWLCM pour le même nombre de conditions initiales $N_o = 34489$.

Tableau 6

| | |
|---|---|
| Nombre de cycles différents | 27307# $2^{14.73}$ |
| Nombre de transitoires différentes | 27203 # $2^{14.72}$ |
| Nombre d'orbites différentes | 30027 # $2^{14.87}$ |
| Moyenne cycles | 32402 # $2^{14.98}$ |
| Moyennes transitoires | 32224 # $2^{14.97}$ |
| Moyenne orbites | 64626 # $2^{15.98}$ |
| Longueur Maximale des cycles | 1211239 # $2^{20.2}$ |
| Longueur Maximale des transitoires | 779792 # $2^{19.5727}$ |
| Longueur Maximale des orbites | 1317077 # $2^{20.33} < 2^{32}$-1 |
| Longueur Minimale des cycles | 1 |
| Longueur Minimale des transitoires | 0 |
| Longueur Minimale des orbites | 107 |

Le Tableau 7 donne le pourcentage des orbites, cycles et transitoires obtenus par intervalle de longueur.

Tableau 7

| Intervalle en longueur | 0 - 9 | 10-$10^2$-1 | $10^2$-$10^3$-1 | $10^3$ - $10^4$-1 | $10^4$ -$10^5$-1 | $10^5$ -$10^6$-1 | $10^6$ - $10^7$-1 | $10^7$-$10^8$-1 |
|---|---|---|---|---|---|---|---|---|
| Orbite % | 0 | 0 | 0.026 | 2.2645 | 81.9914 | 15.7152 | 0.0029 | 0 |
| Cycle % | 0.0174 | 0.2349 | 2.3196 | 21.1256 | 72.8783 | 3.4214 | 0.0010 | 0 |
| Transitoire % | 0.0261 | 0.2378 | 2.308 | 21.0879 | 73 | 3.3373 | 0 | 0 |

Il est remarquable, à partir du Tableau 7 que 82 % d'orbites se trouvent dans la tranche de longueurs comprises entre $10^4$ et $10^5$, et environ 98 % d'orbites se trouvent dans la tranche de longueurs comprises entre $10^3$ et $10^6$

Les tableaux 8, 9 et 10 donnent le nombre des cycles, des transitoires et des orbites et leurs fréquences correspondantes.

Tableau 8

| Nombre de cycles | 21415 | 4784 | 952 | 133 | 20 | 3 |
|---|---|---|---|---|---|---|
| Fréquence-cycle | 1 | 2 | 3 | 4 | 5 | 6 |

Tableau 9

| Nombre de transitoires | 21324 | 4726 | 941 | 179 | 25 | 7 | 1 |
|---|---|---|---|---|---|---|---|
| Fréquence-transitoire | 1 | 2 | 3 | 4 | 5 | 6 | 7 |

Tableau 10

| Nombre d'orbites | 26010 | 3607 | 378 | 29 | 3 |
|---|---|---|---|---|---|
| Fréquence-orbite | 1 | 2 | 3 | 4 | 5 |

Ainsi, les résultats obtenus par la carte PWLCM avec N = 32 bits sont très proches des résultats obtenus avec le filtre récursif à trois retards avec N = 11. La règle analytique $\Delta_{nom} \cong \sqrt{\left(2^N\right)^3} = 2^{3N/2} = 2^{48}$ pour N = 32, dans le cas du filtre récursif peut être estimée par extrapolation à partir des résultats expérimentaux, par la valeur $\Delta_{nom} \cong 2^{45}$. Donc, la longueur minimale de la séquence chaotique en sortie du système de génération 100 est $L_{min} > 7 \times 2^{128}$ échantillons. Avec cette séquence on peut chiffrer environ $10^{32}$ images différentes de taille chacune : $3 \times 1024 \times 1024 \times 32$ bits.

Ainsi, les résultats expérimentaux décrits ci-dessus montrent que le générateur chaotique selon l'invention peut être utilisé sans crainte dans toutes les applications touchant à la sécurité des données.

## Revendications

1. Générateur (2) de séquences chaotiques $e_u(n)$, n étant un entier strictement positif, de valeurs entières représentées sur un nombre de bits de quantification N déterminé, destinées notamment à former des clés de cryptage d'informations, ledit générateur (2) comprenant au moins deux filtres récursifs (4, 6) discrets d'ordre au moins égal à 1 générant en sortie une séquence chaotique de valeurs entières, chaque filtre récursif (4, 6) comprenant des moyens de mise en oeuvre (8, 10) d'une fonction non linéaire F, raccordés à travers une porte ou-exclusif (12, 14) à des moyens de génération d'une séquence de perturbation $Q(n)$ de valeurs entières représentées sur un nombre de bits de quantification k déterminé, **caractérisé en ce que** les deux filtres (4, 6) sont montés en parallèle, la séquence chaotique $e_u(n)$ de sortie du générateur (2) étant égale à un ou-exclusif (20) des séquences chaotiques de sortie des filtres récursifs (4, 6) et **en ce que** les moyens de mise en oeuvre (8, 10) de la fonction non linéaire comprennent une carte chaotique.

2. Générateur (2) de séquences chaotiques selon la revendication 1, **caractérisé en ce que** les moyens de génération d'une séquence de perturbation dans chaque filtre (4, 6) comprennent un registre à décalage à réaction (16, 18) à longueur maximale utilisant un polynôme primitif de degré k.

3. Générateur (2) de séquences chaotiques selon la revendication 1 ou 2, **caractérisé en ce que** l'ordre de chaque filtre récursif est inférieur ou égal à 3.

4. Générateur (2) de séquences chaotiques selon l'une quelconque des revendications 1 à 3, **caractérisé en ce que** les moyens de mise en oeuvre (8, 10) de la fonction non linéaire comprennent une carte chaotique linéaire par morceaux PWLCM.

5. Générateur (2) de séquences chaotiques selon les revendications 3 et 4, **caractérisé en ce que** les séquences $e_{uj}(n)$ de sortie de chaque filtre récursif j = 1,2 sont données par la relation $e_{uj}(n) = F(X_j(n\text{-}1), P) \oplus Q(n)$
où

$$F\left(X_j(n-1),P\right)=\begin{cases}\left\lfloor\dfrac{2^N\times X_j(n-1)}{P}\right\rfloor & 0\le X_j(n-1)\le P\\[2em]\left\lfloor\dfrac{2^N\times\left[X_j(n-1)-P\right]}{2^{N-1}-P}\right\rfloor & P\le X_j(n-1)\le 2^{N-1}\\[2em]\left\lfloor\dfrac{2^N\times\left[2^N-1-X_j(n-1)-P\right]}{2^{N-1}-P}\right\rfloor & 2^{N-1}\le X_j(n-1)\le 2^N-P\\[2em]\left\lfloor\dfrac{2^N\times\left[2^N-1-X_j(n-1)\right]}{P}\right\rfloor & 2^N-P\le X_j(n-1)\le 2^N\end{cases}$$

avec

$$X_j(n-1)=\mathrm{mod}\left[k_{uj}(n-1)+c_{j1}\times e_{uj}(n-1)+c_{j2}\times e_{uj}(n-2)+c_{j3}\times e_{uj}(n-3),2^N\right]$$

où

- $P$ est un paramètre de contrôle dont la valeur est inférieure à $2^{N-1}$,
- $k_{uj}(n)$ est la séquence d'entrée du filtre récursif j,
- $C_{j1}$, $C_{j2}$, $C_{j3}$ représentent les coefficients du filtre récursif j,
- l'opération $\lfloor X\rfloor$ consiste à retourner le plus grand entier plus petit ou égal à x,
- l'opération $\mathrm{mod}(X,2^N)$ consiste à effectuer le modulo $2^N$ de $X$.

6. Générateur (2) de séquences chaotiques selon l'une quelconque des revendications 1 à 3, **caractérisé en ce que** les moyens de mise en oeuvre de la fonction non linéaire comprennent une carte chaotique de type « SKEW-Tent ».

7. Système de génération de séquences chaotiques comprenant au moins un ensemble de 14 générateurs de séquences chaotiques selon l'une quelconque des revendications 1 à 6, lesdits générateurs (101, 102, 103, 104, 105, 106, 107, 108, 109, 110, 111, 112, 113, 114, 115, 116, 117, 118, 119, 120, 121, 122, 123, 124, 125, 126, 127, 128) étant répartis en deux groupes de 7 générateurs chacun, **caractérisé en ce qu'**il comprend :

   - un premier multiplexeur analogique (130, 134) permettant de sélectionner la sortie d'un premier générateur parmi les générateurs du premier groupe,
   - un deuxième multiplexeur analogique (132, 136) permettant de sélectionner la sortie d'un deuxième générateur parmi les générateurs du deuxième groupe,
   les sorties des deux multiplexeurs étant raccordées à une porte ou-exclusif (138, 140) générant en sortie la séquence chaotique, et
   - des moyens d'adressage des multiplexeurs comprenant un registre à décalage à réaction (144) raccordé à une horloge (146) dont la période est fonction de la longueur de la séquence chaotique.

8. Système de génération (100) de séquences chaotiques selon la revendication 7, **caractérisé en ce qu'**il comprend deux ensembles montés en parallèle de 14 générateurs de séquences chaotiques chacun, la séquence chaotique générée en sortie du système de génération (100) étant égale à un ou-exclusif (142) des séquences chaotiques générées aux sorties des deux ensembles de 14 générateurs.

9. Système de génération (100) de séquences chaotiques selon la revendication 2 et la revendication 8, **caractérisé en ce que** les polynômes primitifs des registres à décalage à réaction du premier ensemble de générateurs (101, 102, 103, 104, 105, 106, 107, 108, 109, 110, 111, 112, 113, 114) sont différents des polynômes primitifs des registres à décalage à réaction du deuxième ensemble de générateurs (115, 116, 117, 118, 119, 120, 121 , 122, 123, 124, 125, 126, 127, 128).

10. Système de génération (100) de séquences chaotiques selon l'une quelconque des revendications 7 à 9, **caractérisé**

**en ce qu'**il comprend des moyens d'élimination (148) d'une quantité déterminée d'échantillons des séquences chaotiques générées par le système (100).

11. Système de génération (100) de séquences chaotiques selon l'une quelconque des revendications 7 à 10, **caractérisé en ce qu'**il comprend des moyens de quantification (150) des séquences chaotiques générées.

12. Système de cryptage, **caractérisé en ce qu'**il comprend un système de génération de séquences chaotiques selon l'une quelconque des revendications 7 à 11, ledit système de génération (100) de séquences chaotiques étant utilisé pour la génération de clés secrètes et dans les procédures de chiffrement/déchiffrement du système de cryptage.

**Patentansprüche**

1. Generator (2) für chaotische Folgen $e_u(n)$, wobei n eine streng positive ganze Zahl ist, von ganzen Zahlen, repräsentiert durch eine bestimmte Anzahl von Quantifizierungsbits N, insbesondere vorgesehen zum Bilden von Informationsverschlüsselungsschlüsseln, wobei der Generator (2) mindestens zwei diskrete rekursive Filter (4, 6) einer Ordnung von mindestens 1 aufweist, die am Ausgang eine chaotische Folge ganzer Zahlen erzeugen, wobei jedes rekursive Filter (4, 6) Mittel zum Ausführen (8, 10) einer nichtlinearen Funktion F aufweist, und die mittels eines Exklusiv-Oder-Gatters (12, 14) mit Mitteln zum Erzeugen einer Störfolge Q(n) von ganzen Zahlen, repräsentiert durch eine Anzahl von Quantifizierungsbits k, verbunden sind, dadurch charakterisiert, dass die zwei Filter (4, 6) parallel geschaltet sind, wobei die chaotische Folge $e_u(n)$, die von dem Generator (2) ausgegeben wird, gleich einer Exklusiv-Oder-Verknüpfung (20) der chaotischen Folgen, die von den rekursiven Filtern (4, 6) ausgegeben werden, ist, und dadurch, dass die Mittel zum Ausführen (8, 10) der nichtlinearen Funktion eine chaotische Abbildung aufweisen.

2. Generator (2) für chaotische Folgen gemäß Anspruch 1, dadurch charakterisiert, dass die Mittel zum Erzeugen einer Störfolge in jedem Filter (4, 6) ein rückgekoppeltes Schieberegister (16, 18) mit maximaler Länge aufweist, das ein primitives Polynom mit Grad k verwendet.

3. Generator (2) für chaotische Folgen gemäß Anspruch 1 oder 2, dadurch charakterisiert, dass die Ordnung jedes rekursiven Filters kleiner oder gleich 3 ist.

4. Generator (2) für chaotische Folgen gemäß einem der Ansprüche 1 bis 3, dadurch charakterisiert, dass die Mittel zum Ausführen (8, 10) der nichtlinearen Funktion eine stückweise lineare chaotische Abbildung PWLCM aufweisen.

5. Generator (2) für chaotische Folgen gemäß den Ansprüchen 3 und 4, dadurch charakterisiert, dass die Folgen $e_{uj}(n)$, die von den rekursiven Filtern j= 1, 2 ausgegeben werden, gegeben sind durch den Zusammenhang

$$e_{uj}(n) = F(X_j(n-1), P) \oplus Q(n)$$

wobei

$$F(X_j(n-1),P) = \begin{cases} \left\lfloor \dfrac{2^N \times X_j(n-1)}{P} \right\rfloor & 0 \le X_j(n-1) \le P \\[2em] \left\lfloor \dfrac{2^N \times \left[ X_j(n-1) - P \right]}{2^{N-1} - P} \right\rfloor & P \le X_j(n-1) \le 2^{N-1} \\[2em] \left\lfloor \dfrac{2^N \times \left[ 2^N - 1 - X_j(n-1) - P \right]}{2^{N-1} - P} \right\rfloor & 2^{N-1} \le X_j(n-1) \le 2^N - P \\[2em] \left\lfloor \dfrac{2^N \times \left[ 2^N - 1 - X_j(n-1) \right]}{P} \right\rfloor & 2^N - P \le X_j(n-1) \le 2^N \end{cases}$$

mit

$$X_j(n-1) \equiv$$

$$\mathrm{mod}\left[ k_{uj}(n-1) + c_{j1} \times e_{uj}(n-1) + c_{j2} \times e_{uj}(n-2) + c_{j3} \times e_{uj}(n-3) , 2^N \right]$$

wobei

- P ein Steuerparameter ist, dessen Wert kleiner ist als $2^{N-1}$,
- $k_{uj}(n)$ die Eingangsfolge des rekursiven Filters j ist,
- $C_{j1}$, $C_{j2}$, $C_{j3}$ die Koeffizienten des rekursiven Filters j repräsentieren,
- die Operation $\lfloor X \rfloor$ darin besteht, dass sie die größte ganze Zahl, die kleiner oder gleich X ist, zurückgibt,
- die Operation $\mathrm{mod}(X,2^N)$ darin besteht, den Rest von X modulo $2^N$ zu berechnen.

6. Generator (2) für chaotische Folgen gemäß einem der Ansprüche 1 bis 3, dadurch charakterisiert, dass die Mittel zum Ausführen der nichtlinearen Funktion eine chaotische Abbildung des Typs "SKEW-Tent" aufweisen.

7. System zum Erzeugen von chaotischen Folgen aufweisend mindestens eine Anordnung von 14 Generatoren für chaotische Folgen gemäß einem der Ansprüche 1 bis 6, wobei die Generatoren (101, 102, 103, 104, 105, 106, 107, 108, 109, 110, 111, 112, 113, 114, 115, 116, 117, 118, 119, 120, 121, 122, 123, 124, 125, 126, 127, 128) in zwei Gruppen mit jeweils 7 Generatoren eingeteilt sind, dadurch charakterisiert, dass es aufweist:

   - einen ersten analogen Multiplexer (130, 134), der es ermöglicht, den Ausgang eines ersten Generators unter den Generatoren der ersten Gruppe auszuwählen,
   - einen zweiten analogen Multiplexer (132, 136), der es ermöglicht, den Ausgang eines zweiten Generators unter den Generatoren der zweiten Gruppe auszuwählen,
   wobei die Ausgänge der zwei Multiplexer mit einem Exklusiv-Oder-Gatter (138, 140) verbunden sind, das an seinem Ausgang die chaotische Sequenz erzeugt, und
   - Mittel zum Adressieren der Multiplexer aufweisend ein rückgekoppeltes Schieberegister (144), das mit einem Taktgeber (146) verbunden ist, dessen Periode eine Funktion der Länge der chaotischen Folge ist.

8. System zum Erzeugen (100) von chaotischen Folgen gemäß Anspruch 7, dadurch charakterisiert, das es zwei Anordnungen mit jeweils 14 Generatoren für chaotische Folgen, die parallel geschaltet sind, aufweist, wobei die am Ausgang des System zum Erzeugen (100) erzeugte chaotische Folge gleich einer Exklusiv-Oder-Verknüpfung (142) der chaotischen Folgen ist, die an den Ausgängen der zwei Anordnungen von 14 Generatoren erzeugt werden.

9. System zum Erzeugen (100) von chaotischen Folgen gemäß Anspruch 2 und Anspruch 8, dadurch charakterisiert, dass die primitiven Polynome der rückgekoppelten Schieberegister der ersten Anordnung von Generatoren (101, 102, 103, 104, 105, 106, 107, 108, 109, 110, 111, 112, 113, 114) unterschiedlich sind von den primitiven Polynomen der rückgekoppelten Schieberegister der zweiten Anordnung von Generatoren (115, 116, 117, 118, 119, 120, 121, 122, 123, 124, 125, 126, 127, 128).

10. System zum Erzeugen (100) von chaotischen Folgen gemäß einem der Ansprüche 7 bis 9, dadurch charakterisiert, dass es Mittel zum Eliminieren (148) einer bestimmten Menge von Abtastwerten der von dem System (100) erzeugten chaotischen Folgen aufweist.

11. System zum Erzeugen (100) von chaotischen Folgen gemäß einem der Ansprüche 7 bis 10, dadurch charakterisiert, dass es Mittel zum Quantifizieren (150) der erzeugten chaotischen Folgen aufweist.

12. Verschlüsselungssystem, dadurch charakterisiert, dass es ein System zum Erzeugen von chaotischen Folgen gemäß einem der Ansprüche 7 bis 11 aufweist, wobei das System zum Erzeugen (100) von chaotischen Folgen für die Erzeugung von geheimen Schlüsseln in Prozeduren zur Chiffrierung/Dechiffrierung des Verschlüsselungssystems verwendet wird.

## Claims

1. A generator (2) of chaotic sequences $e_u(n)$, n being a strictly positive integer, of integer values represented on a determined number of quantification bits $N$, intended in particular to form data encrypting keys, said generator (2) comprising at least two discrete recursive filters (4, 6) at least of first-order generating an output chaotic sequence of integer values, each recursive filter (4, 6) comprising means (8, 10) for implementing a nonlinear function F, connected via an exclusive-or gate (12, 14) to means for generating a perturbation sequence $Q(n)$ of integer values represented on a determined number of quantification bits k, **characterized in that** the two filters (4, 6) are mounted in parallel, the chaotic sequence $e_u(n)$ output from the generator (2) being equal to an exclusive-or (20) of the chaotic sequences output from the recursive filters (4, 6), and **in that** the means (8, 10) for implementing the nonlinear function comprise a chaotic map.

2. The generator (2) of chaotic sequences according to claim 1, **characterized in that** the means for generating a perturbation sequence in each filter (4, 6) comprise a maximum length feedback shift register (16, 18) using a primitive polynomial of degree k.

3. The generator (2) of chaotic sequences according to claim 1 or 2 **characterized in that** the order of each recursive filter is third-order or lower.

4. The generator (2) of chaotic sequences according to any of claims 1 to 3 **characterized in that** the means (8, 10) for implementing the nonlinear function comprise a piece-wise linear chaotic map PWLCM.

5. The generator (2) of chaotic sequences according to claims 3 and 4 **characterized in that** the sequences $e_{uj}(n)$ output from each recursive filter j = 1,2 are given by the equation $e_{uj}(n) = F(X_j(n\text{-}1),P) \oplus Q(n)$
where:

$$F\left(X_j(n-1),P\right) = \begin{cases} \left\lfloor \dfrac{2^N \times X_j(n-1)}{P} \right\rfloor & 0 \le X_j(n-1) \le P \\[2em] \left\lfloor \dfrac{2^N \times \left[X_j(n-1)-P\right]}{2^{N-1}-P} \right\rfloor & P \le X_j(n-1) \le 2^{N-1} \\[2em] \left\lfloor \dfrac{2^N \times \left[2^N-1-X_j(n-1)-P\right]}{2^{N-1}-P} \right\rfloor & 2^{N-1} \le X_j(n-1) \le 2^N-P \\[2em] \left\lfloor \dfrac{2^N \times \left[2^N-1-X_j(n-1)\right]}{P} \right\rfloor & 2^N-P \le X_j(n-1) \le 2^N \end{cases}$$

with

$$X_j(n-1) = \mathrm{mod}\left[k_{uj}(n-1) + c_{j1} \times e_{uj}(n-1) + c_{j2} \times e_{uj}(n-2) + c_{j3} \times e_{uj}(n-3), 2^N\right]$$

where:

- $P$ is a control parameter whose value is less than $2^{N-1}$,
- $k_{uj}(n)$ is the input sequence of the recursive filter $j$,
- $C_{j1}$, $C_{j2}$, $C_{j3}$ represent the coefficients of the recursive filter j,
- the operation $\lfloor X \rfloor$ consists of computing the largest integer equal to or smaller than x,
- the operation $\mathrm{mod}(X, 2^N)$ consists of performing the modulo $2^N$ of $X$.

6. The generator (2) of chaotic sequences according to any of claims 1 to 3 **characterized in that** the means for implementing the nonlinear function comprise a chaotic map of « SKEW-Tent » type.

7. A system for generating chaotic sequences comprising at least one assembly of 14 generators of chaotic sequences according to any of claims 1 to 6, the said generators (101, 102, 103, 104, 105, 106, 107, 108, 109, 110, 111, 112, 113, 114, 115, 116, 117, 118, 119, 120, 121, 122, 123, 124, 125, 126, 127, 128) being divided into two groups of 7 generators each, **characterized in that** it comprises:

 - a first analogue multiplexer (130, 134) allowing the selection of the output of a first generator from among the generators of the first group,
 - a second analogue multiplexer (132, 136) allowing the selection of the output of a second generator from among the generators of the second group,
 the outputs of the two multiplexers being connected to an exclusive-or gate (138, 140) whose output generates the chaotic sequence, and
 - means for addressing the multiplexers comprising a feedback shift register (144) connected to a clock (146) whose period is a function of the length of the chaotic sequence.

8. The system (100) for generating chaotic sequences according to claim 7, **characterized in that** it comprises two assemblies mounted in parallel each having 14 generators of chaotic sequences, the generated chaotic sequence output from the generating system (100) being equal to an exclusive-or (142) of the chaotic sequences generated at the outputs of the two assemblies of 14 generators.

9. The system (100) for generating chaotic sequences according to claim 2 and claim 8, **characterized in that** the primitive polynomials of the feedback shift registers of the first assembly of generators (101, 102, 103, 104, 105, 106, 107, 108, 109, 110, 111, 112, 113, 114) are different from the primitive polynomials of the feedback shift registers of the second assembly of generators (115, 116, 117, 118, 119, 120, 121 , 122, 123, 124, 125, 126, 127, 128).

10. The system (100) for generating chaotic sequences according to any of claims 7 to 9 **characterized in that** it comprises means (148) for eliminating a determined quantity of samples of chaotic sequences generated by the system (100).

11. The system (100) for generating chaotic sequences according to any of claims 7 to 10 **characterized in that** it comprises means (150) for quantifying the generated chaotic sequences.

12. An encrypting system, **characterized in that** it comprises a system for generating chaotic sequences according to any of claims 7 to 11, the said system (100) for generating chaotic sequences being used for generating secret keys and in enciphering/deciphering procedures of the encryption system.

FIG.1

47

-48-

$Q_{(n)}$

-46-

+

50

# FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE SAFWAN EL ASSAD et al.** Design and Analyses of Efficient Chaotic Generators for Crypto-Systems. *Advances in Electrical and Electronics Engineering IAENG Special Edition of the World Congress on Engineering and Computer Sciences,* 2008, vol. 1, 3-12

- **O.E. LANFORD III.** Informal Remarks on the Orbit Structure of Discrète Approximation to Chaotic Maps. *dans Experimental Mathematics,* 1998, vol. 7 (4), 317-324